# EUROPEAN PATENT APPLICATION

(11) **EP 1 577 331 A1**
(43) Date of publication of application: **21.09.2005**
(21) Application number: 03782831.6
(22) Date of filing: 19.12.2003
(51) Int. Cl.: C08F 290/02, C08F 2/44, G01N 33/545, A61K 47/30, H01F 1/28, H01F 1/36

(54) **LATEX PARTICLES AND PROCESS FOR PRODUCING THE SAME**

(30) Priority: 19.12.2002 JP 2002367683
(71) Applicant: Tokyo University of Science, Educational Foundation, Tokyo 162-8601 (JP)
(72) Inventor: NAGASAKI, Yukio, Moriya-shi, Ibaraki 302-0128 (JP); KATAOKA, Kazunori, Nakano-ku, Tokyo 165-0031 (JP); TAKAHASHI, Tadahito, Yokohama-shi, Kanagawa 231-0852 (JP); OTSUKA, Hidenori, Tsukuba-shi, Ibaraki 305-0044 (JP); ITO, Noriyuki, Noda-shi, Chiba 278-0022 (JP); ISHIGAKI, Kouichiro, Tomigusuku-shi, Okinawa 901-0231 (JP)
(74) Representative: Albrecht, Thomas
(86) International application number: PCT/JP2003/016326
(87) International publication number: WO 2004/056895

(57) **Abstract**

This invention provides latex particles wherein non-specific adsorption or binding of undesired impurities which usually accompanies the use of latex particles is inhibited, and a process to produce such latex particles. This invention also provides diagnostic agent which contains said particles. In another embodiment, this invention provides latex particles comprising both a ligand group-holding site which has a ligand group on the one terminal and is bound, on the other terminal, to latex particles, and which has a long chain of polyoxyethylene; and a non-specific adsorption-inhibiting site which is bound, at one terminal, to latex particles, and which has a short chain of polyoxyethylene. In this embodiment, this invention also provides a process to produce said particles.

## Description

### Technical Field

This invention relates to magnetic particles- or label-containing latex polymer particles which are chiefly usable for the detection of components of organisms and for diagnosis, and to a process to produce the particles.

### Background Art

As an example of inorganic metal-containing latex polymer particles which have conventionally been used for such purposes as the detection of components of organisms, diagnosis and the like, there can be mentioned particles which are manufactured by emulsion polymerization between an organic layer wherein hydrophobic vinyl aromatic monomer (which may optionally include comonomer) and magnetic particles are dispersed and an emulsifier-containing aqueous solution. In such emulsion polymerization, water-insoluble organic compounds are made to co-exist so that magnetic particles may efficiently be encapsulated in latex particles (e.g., Patent Document 1).

"Magnetic particles (which are synthesized in the method as mentioned in Patent Document 1) have a shape of polymer-coated magnetic body, and, therefore, the magnetic particles have different sizes depending on the particle size of magnetic body as a nucleus. Hence, it is difficult to keep the size of magnetic particles uniform, in particular when the magnetic body has a particle size in a range of 0.1 to 1.0 µm. Besides, synthetic operation is very complicated." For this reason, there has been provided another method (e.g., Patent Document 2); latex polymer particles which are a polystyrene- or styrene-butadiene copolymer are previously swollen by organic solvent and by heating, and, then, labeling material such as magnetic substance and fluorescent material is added and mixed by stirring, and, thus, said fluorescent material or the like is embedded in the vicinity of surface layer of the latex polymer particles.

The method of emulsion polymerization of Patent Document 1 for encapsulating magnetic particles in latex polymer particles has some defects. Maybe for this reason, in most of other methods, swollen polymer particles are brought into contact with an aqueous solution of fluorescent substance or the like (which is to be chelated where necessary) so that the fluorescent substance or the like may thereby be mixed, or incorporated, into the polymer particles or microsphere, and, in this manner, magnetic body or fluorescent substance is encapsulated or embedded in latex polymer particles (e.g., Patent Documents 3 and 4). Patent Document 3 discloses latex polymer particles which were manufactured from hydrophobic monomer such as styrene, nonionic water-soluble monomer such as acrylamide and anionic monomer such as acrylic acid, for the purpose of improving the stability of latex polymer particles in aqueous solution and of immobilizing physiologically reactive seed on said polymer particles by covalent bonding or absorption. Patent Document 4, on the other hand, uses, as a comonomer for styrene monomer or the like, a macromer which comprises poly(oxyalkylene) segment having, at one terminal, a polymerizable ethylenic group and, at the other terminal, an active ester group, with a view to providing a reactive microsphere which has excellent stability in aqueous medium, and is capable of stably immobilizing thereon functional substances such as protein by chemical bonding, and on which non-specific adsorption of protein or the like hardly occurs.

Documents which are cited above and below are identified as follows.
[Patent Document 1]
   Japanese Patent KOKAI Publication No. Sho 56 (1981)-164503 (see page 1, right lower column, lines 2 to 14, in particular)
[Patent Document 2]
   Japanese Patent KOKAI Publication No. Hei 10 (1998)-55911 (see page 2, right column, lines 33 to 44, and page 5, left column, lines 34 to 45, in particular)
[Patent Document 3]
   Japanese Patent KOKAI Publication No. Sho 61 (1986)-218945 (see page 4, left lower column, lines 4 to 16, and page 3, right upper column, lines 2 to 15, in particular)
[Patent Document 4]
   Japanese Patent KOKAI Publication No. Hei 8 (1996)-133990 (see page 2, left column [claim 1], the same page, right column, lines 18 to 28, in particular)

### Disclosure of Invention

Latex polymer particles of Patent Document 3 have improved dispersion stability in aqueous solution. When used in a sample which contains biological fluid (e.g., serum, urine, etc.), however, latex polymer particles of Patent Document 3 tend to show non-specific adsorption of protein or the like. The microsphere of Patent Document 4, on the other hand, has succeeded, to some extent, in inhibiting the above-mentioned non-specific adsorption of protein or the like, although it is still unsatisfactory. Besides, when magnetic body or label is intended to be mixed in (such mixing is neither mentioned nor suggested in this document) during the production of microsphere, microspheres are liable to agglomerate with one another to give a product which lacks dispersion stability.

The inventors of this invention have found out that, when a certain kind of macromer and one or more kinds of monomers which take part in the formation of latex are subjected to redox polymerization in an aqueous medium, such agglomeration as mentioned above hardly or not occurs at all, resulting in the production of latex particles with a very narrow particle size distribution. They have further found that thus produced latex particles show decreased non-specific adsorption of protein or the like. The inventors have also found out that such non-specific adsorption of protein or the like can be further decreased by use of two kinds of macromers which are definitely different in chain length.

Moreover, the inventors have found that latex particles can be formed as desired under soapless condition according to the following process: before said certain kind of macromer is polymerized, latex particles are previously made from a part of monomers which take part in the formation of latex (latex-forming monomers), and, subsequently, said macromer and the rest of monomers are subjected to polymerization (so-called seed polymerization).

Thus, this invention provides a process to produce latex polymer particles which is characterized in that polymerization reaction is conducted in an aqueous medium while the aqueous medium is stirred, said aqueous medium comprising:
(i) a macromer which has, on one terminal, a polymerizable ethylenic group and, on the other terminal, a hydrophilic polymer segment (which may be terminated with a ligand-introducing group) via or not via a hydrophobic polymer segment,
(ii) one or more kinds of latex-forming monomer,
(iii) a polymerization initiator, preferably a redox initiator, and
(iv) optionally a magnetic body or a label.

As a specific embodiment, this invention also provides a production process as mentioned above wherein polymerization reaction (so-called seed polymerization) occurs in the co-presence of latex polymers which have previously been prepared from monomer (ii).

This invention also provides, as a high-polymer material, polymer latex particles having an average particle size of 0.01 to 5 µm when measured by a dynamic light scattering photometer (DLS), which are conveniently produced by the above-mentioned production process, and in which their surface layer (shell) domain has hydrophilic polymer segment, and their nucleus (core) domain has preferably magnetic body or label mixed in, said latex polymer particles being produced by the polymerization of:
(a) 0.5 to 99.5 % by weight of macromer which has, on one terminal, a polymerizable ethylenic group and, on the other terminal, a hydrophilic polymer segment (this segment, which may be terminated, is a group for the introduction of ligand) via or not via a hydrophobic polymer segment, and
(b) 0.5 to 99.5 % by weight of one or more kinds of latex-forming monomer,
based on the weight of total monomer used.

### Brief Description of Drawings

Fig. 1 is a graph which shows the change of the amount of FITC-BSA adsorbed depending on the times of washing, with regard to each of particles A-1, A-3, B-1 and B-2. In this graph, ◇ denotes biotinylated magnetic latex particles A-3, ■ denotes magnetic latex particles A-1, Δ denotes biotinylated ferrite beads B-2, and × denotes ferrite beads B-1.
Fig. 2 is a graph which shows the change of the amount of streptavidin adsorbed depending on the times of washing, with regard to each of particles A-1, A-3, B-1 and B-2. Marks in this graph have the same meaning as in Fig. 1.
Fig. 3 are photographs in place of drawing which show dispersions of latex particles of this invention. Photo (a) shows the state of latex which is obtained with use of redox initiator. Photo (b) shows the state of latex which is obtained with use of radical initiator.
Fig. 4 are micrographs in place of drawing which show the state of magnetic latex obtained in Example 5. (See photo (b).
Photo (a) shows the state of conventional latex particles.)

### Embodiments of Invention and Best Mode for Carrying Out the Invention

In this specification, "latex polymer particles" mean polymer particles or high-polymer materials which are capable of forming latex in aqueous medium. The term latex is used in a broad concept which comprehends rubber latex, resin latex, etc., and means a dispersion of polymer particles in water as a chief dispersing medium. The term aqueous medium means an aqueous solution which may contain organic solvent which is miscible with water, e.g., ethanol, methanol, tetrahydrofuran, acetone and acetonitrile, and also buffer etc. In a specific example, the aqueous medium is pure water.

In this invention, surface layer (shell) domain of particles means, not restrictively, a domain which encircles a nucleus (core) portion of particles which comprises a polymerized chain originated from a polymerizable ethylenic group and a hydrophobic group (e.g., aromatic group, alkyl group, etc.) bound to the ethylenic group. Surface layer domain is usually covered with hydrophilic polymer segment. It is understood that, in particles in which magnetic body or label is mixed, said magnetic body or the like is either completely encapsulated, or partially embedded, in the above-mentioned core domain or portion.

The phrase "terminated with a ligand-introducing group" means that a ligand-introducing group is present as a terminal group at a terminal of hydrophilic polymer segment which terminal is opposite to the polymerizable ethylenic group. "Ligand-introducing group" means a functional group (which may be protected with a protective group so long as it is easily deblocked) like X in general formula I-a as mentioned later, which is capable of covalently binding to ligand molecule. Ligand generally means a material (e.g., antigen or hapten which binds to antibody, substrate which binds to enzyme, hormone, lectin, biotin or the like which binds to receptor, etc.) which specifically binds to functional protein. In this invention, however, the concept of ligand also includes the reverse case, i.e., antibody or its fragment (F_{ab}, F(_{ab'})₂, etc.) which binds to antigen.

In this specification, "1 to 3 carbon atoms" and symbols like "C₁-C₃" are interchangeable with each other. Macromer, which is also called macromonomer, usually means a polymerizable polymer whose molecular weight is thousands to tens of thousands. In this invention, where suitable, macromer also includes so-called oligomer whose molecular weight is hundreds or less. The macromer which is used in this invention has, on one terminal, a polymerizable ethylenic group and, on the other terminal, a hydrophilic polymer segment (which may be terminated with a ligand-introducing group) via or not via a hydrophobic polymer segment. "Polymerizable ethylenic group" means a group which is polymerizable with radial polymerization initiator or redox initiator. Examples of such residue include (meth)acryloyl and vinylbenzyl, vinylphenyl, etc., whose aromatic ring is substituted or unsubstituted.

The phrase "via or not via a hydrophobic polymer segment" means that macromer optionally has a hydrophobic polymer segment to be a so-called block copolymer. It is understood that an independent polymer corresponding to said hydrophobic polymer segment is scarcely-soluble or insoluble in water. Not restrictive, examples of such a hydrophobic polymer segment include poly(lactide) chain, poly(ε-caprolactone) chain, poly(α- and/or β-benzyl aspartic acid) chain and poly(γ-benzyl glutamic acid) chain.

Hydrophilic polymer segment which is essential for macromer is a segment originated from a polymer chain which becomes water-soluble as a corresponding independent polymer. Such a hydrophilic segment is preferably nonionic, and is originated, not restrictive, from a main chain such as poly(ethyleneglycol) [hereinafter sometimes referred to as PEG; interchangeable with poly(oxyethylene) or poly(ethyleneoxide)], poly(vinylalcohol), poly(vinylpyrrolidone), poly(dextran), poly(dextrin), gelatin, etc., among which PEG is especially desirable.

As mentioned above, macromer has a ligand-introducing group. Such a group or its part is selected from the group consisting of hydroxyl group, carboxyl group, sulfo group, aldehyde group, amino group, imino group, mercapto group, active ester-type protected hydroxyl group, active ester-type protected carboxyl group, acetal-type protected aldehyde group, organic sulfonyl-protected hydroxyl group, reactivity-protected amino group and C₁-C₄ alkoxyl group (e.g., methoxy, ethoxy, propoxy, iso-propoxy, etc.).

Such macromer has formula (I) as follows: 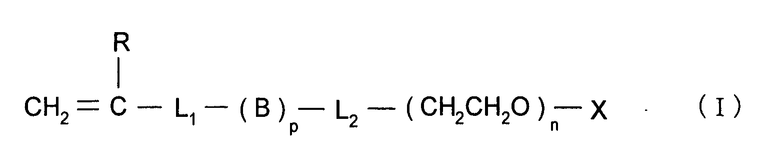 wherein R denotes a hydrogen atom or 1 to 3 carbon atoms (or C₁-C₃ such as methyl, ethyl, propyl, etc.); L₁ denotes (CH₂)ₐO, COO, OCO, CONH, (CH₂)ₐNH, phenylene (C₆H₄), phenyleneoxy (C₆H₄O), oxyphenylene (OC₆H₄), benzyloxy (C₆H₄CH₂O) or oxybenzyl (OCH₂C₆H₄) (a denotes an integer of 1 to 3; each group is to be incorporated in the above formula in the direction as mentioned);
B denotes a compound of the following formula: 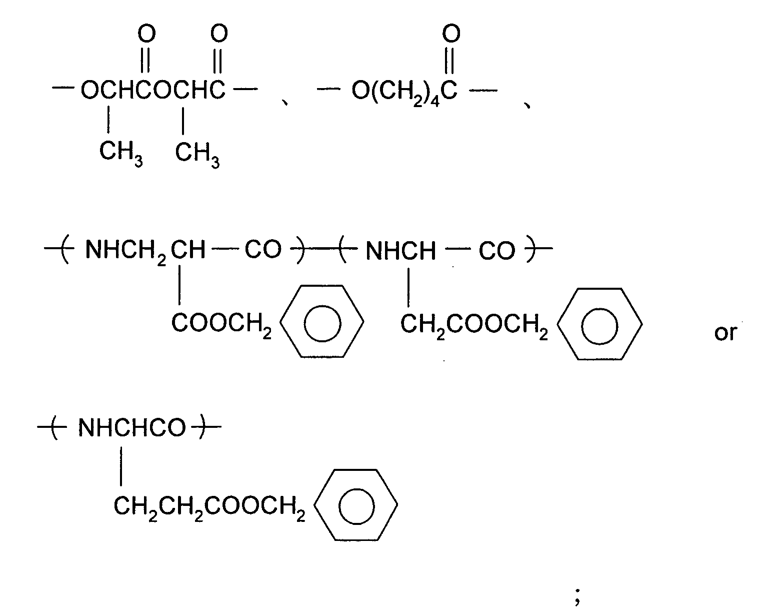 L₂ denotes a linking group comprising oxygen atom, C₁-C₄ alkylene, carbonyl, imino, or a combination of at least two thereof;
X denotes a group selected from the group consisting of hydroxyl group, carboxyl group, sulfo group, aldehyde group, amino group, imino group, active ester-type protected hydroxyl group, protected amino group 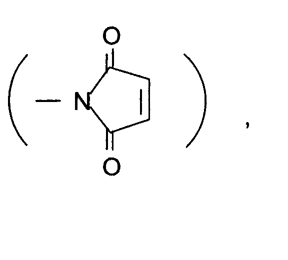 active ester-type protected carboxyl group or acetal-type protected aldehyde group (acetalized formyl etc.) which is bound via or not via (CH₂)_{b} or CO(CH₂)_{b};
n denotes an integer of 11 to 10,000; and
p denotes an integer of 0 to 500 (when the group concerned exists, an integer of 5 to 500).

It is preferable, in this invention, to use two kinds of macromers simultaneously so as to prevent non-specific adsorption of protein or the like. The first of said two macromers has formula (I-a) as follows: 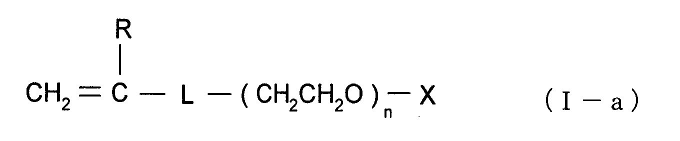 wherein R, X and n have the same meanings as defined in the above formula (I), and L is the same as defined with regard to L₁ in formula (I).

The second macromer has formula (I-b) as follows: 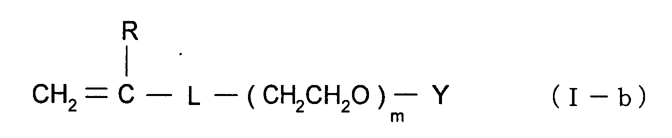 wherein R and L have the same meanings as defined in the above formula (I-a); Y denotes an alkyl group having 1 to 6 carbon atoms which may be substituted with halogen atom (fluorine, chlorine, bromine) or a benzene group whose benzene ring may be substituted with halogen or an alkyl or alkoxyl group having 1 to 3 carbon atoms; m denotes an integer which is smaller than n by at least 10, and, although depending on n, preferably denotes an integer of 20 to 1,000, more desirably an integer of 30 to 200.

Among the above-mentioned macromers, those which have poly(ethyleneglycol) chain as a hydrophilic polymer segment can be produced by the process as mentioned in U.S. Patent 5,925,720 (WO 96/33233) or by suitably improving said process where necessary. The other macromers are produced in the following manner: a polymer corresponding to hydrophilic polymer segment and a polymer corresponding to hydrophobic polymer segment, when such one exists, are connected to each other by any method known to those skilled in the art; then, both terminals are modified with any desired groups.

Polymer latex particles which are produced by using macromer of the above formula (I-a) and macromer of formula (II-b) simultaneously are in particular desirable since they show remarkably inhibited non-specific adsorption of protein or the like to their surface.

Macromer of the above formula (I-a) and macromer of formula (I-b) are to be used in the proportion ranging from 1:5000 to 5000:1, preferably from 1:3000 to 3000:1, especially desirably from 1:100 to 1000:1.

For latex-forming monomer, any kind of monomer is usable so long as it is capable of forming polymer latex particles when polymerized with the above-mentioned monomers. Not restrictive, examples of such a latex-forming monomer include hydrophobic vinyl monomer, in particular vinyl aromatic compounds such as substituted or unsubstituted styrene and 1-vinylnaphthalene, more specifically styrene, *t*-methylstyrene, ethylstyrene, *p*-bromostyrene, vinyltoluene and *t*-butylstyrene. Also included are C₁-C₄ alkyl (meth)acrylate, e.g., methyl acrylate, methyl methacrylate, ethyl acrylate, ethyl methacrylate, *n*-butyl acrylate and *n*-butyl methacrylate; substituted (with, for instance, C₁-C₆ alkyl or halogen atom) or unsubstituted conjugated diene, e.g., butadiene and isoprene. Among the above, styrene is preferable in view of cost and also hardness as its property.

In an alternative method, latex particles are previously made from a part of latex-forming monomers, and thus produced latex particles are made to co-exist when latex-forming monomers are co-polymerized with macromer. This manner of polymerization, which is known in this field as seed polymerization, is suitable for forming large particles. When the latex particles of this invention are produced even by such seed polymerization, latex particles are uniformly dispersed, owing to the presence of such a macromer as mentioned above, under so-called soapless condition, and, furthermore, stable latex can be obtained. It is understood that, in thus produced latex particles, magnetic body is adhered to, or mixed in, latex particles which essentially comprise latex-forming
monomer (which accounts for at least 95 %, preferably at least 98 %), the rest of said monomer being polymerized in, or on the surface of, latex particles, and, under circumstances, also a part of macromer being polymerized in latex particles, and that hydrophilic segment of macromer exists on the surface of particles.

Another monomer of formula (II): 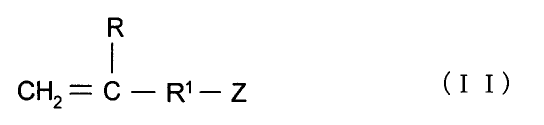 wherein R denotes a hydrogen atom or an alkyl group having 1 to 3 carbon atoms; R¹ denotes a single bond, (CH₂)ₐ, CH=CH, COO, OCO, CONH, (CH₂)ₐNH, phenylene (C₆H₄), phenyleneoxide (C₆H₄O), oxyphenylene (OC₆H₄), benzyloxy (C₆H₄CH₂O) or oxybenzyl (OCH₂C₆H₄) (a denotes an integer of 1 to 3; each group is to be incorporated in the above formula in the direction as mentioned); and Z denotes a group selected from the group consisting of hydrogen atom, amino group, mono- or di-C₁-C₃ alkylamino group, carboxyl group, cyano group, amide group, urethane group and urea group,
may additionally be included for the production of polymer latex particles of this invention. Thus, the polymer latex particles which are provided by this invention may contain a polymer chain originated from the above-mentioned macromer, latex-forming monomer and monomer of formula (II). Examples of said monomers include diethylaminoethyl methacrylate, *p*-vinyl benzoate, acrylamide, methacrylic acid, or the like.

According to this invention, at least macromer of formula (I) or macromers of formulae (I-a) and (I-b) and polymer latex-forming monomer, and, optionally, monomer of formula (II) as well, are made to co-exist and subjected to polymerization, and, thus, polymer latex particles as desired are produced. During this polymerization, magnetic body or label may be included. Fine particles of ferrite, neodymium, etc., may be mentioned as examples of such magnetic body. Particles may be prepared in polymerization reaction system unless polymerization reaction receives no adverse effects. Label is a compound or fine particles which serve to distinguish polymer latex particles by optical or any other means. Examples of such compound or fine particles include, not restrictively, particles of lanthanoid metal such as europium (Eu) and terbium (Tb); semiconductor such as CdS, CdSe, ZnS and ZnSe; light emitting particles such as InP; and silica, zeolite, etc. Fine particles mean particles whose average size is of the order of nanometer (nm). These particles, in particular magnetic body, have preferably their surface rendered hydrophobic before use, since this treatment raises the rate of said particles mixed in latex particles and improves the stability of encapsulated magnetic body in latex particles. As an example of such a treatment for hydrophobicity, there can be mentioned surface modification such as the adsorption, onto ferrite surface, of a compound which has both a hydrophobic group such as vinyl benzoate, 3-(trimethoxysilylpropyl) methacrylate, etc., and a polymerizable ethylenic group.

Polymerization may be conducted under any conditions so long as latex particles which are formed through polymerization reaction have a uniform particle size and do not agglomerate with one another. Although radical initiator may be used, thus formed latex particles may sometimes agglomerate. Redox initiator is preferably used rather than radical initiator since redox initiator gives latex particles which have a uniform particle size and contain hardly any, or no agglomerate at all. Examples of redox initiator include a system of peroxide and amine such as a system of benzoyl peroxide and N,N-dimethylaniline; a system of ammonium persulfate and sodium sulfite; and a system of ammonium persulfate and Fe(NO₃)₂.

The above-mentioned latex-forming monomer, macromer, optionally monomer of formula (II), optionally magnetic body or label, and polymerization initiator are subjected to polymerization reaction in an aqueous medium, optionally with heating (up to about 100°C). Redox polymerization is conducted at an ambient temperature, without heating. This reaction system is usually placed in inert atmosphere such as argon, nitrogen or the like. Said latex-forming monomer in an aqueous medium is conveniently chosen so that it may account for 0.1 to 50 w/w %. The above-mentioned reaction system is prepared in any order so long as polymerization reaction proceeds. Preferably, however, Examples which are mentioned later should be followed. Optimal conditions of reaction time vary depending on reaction temperature and the species of monomer. Generally, however, reaction is carried out for 24 hours. For radical polymerization initiator, any conventional initiator will do, without restriction. Representative examples of radical polymerization initiator include azo compounds such as 2,2'-azobisisobutyronitrile (AIBN), 2,2'-azobis[2-(2-imidazolin-2-yl)propane], 2,2'-azobis(2-methylbutyronitrile); and organic peroxides such as benzoyl peroxide, *t*-butyl hydroperoxide and di-isopropyl peroxydicarbonate. Such initiator may account for 0.001 to 10 mole %, preferably 1 to 5 mole %, based on the total monomer (including macromonomer). The above-mentioned redox initiator, on the other hand, is used in the proportion of 0.00 to 10 mole %, preferably 0.1 to 1 mole %, based on the total monomer.

Thus produced latex polymer particles may be purified by centrifugal separation, sedimentation, dialysis, ultrafiltration or gel filtration, either separately or in combination. Among thus obtained latex polymer particles, those which have reactive PEG macromer-originated unit can have the above-mentioned ligand such as antibody, antigen, haptene, lectin, sugar or biotin immobilized thereon via covalent bond through any known reaction, after protective group (e.g., acetal) is deblocked where necessary.

In the above-mentioned polymerization, monomers are used in the proportion as follows: 0.5 to 99.5 % by weight of macromer, 0.5 to 99.5 % by weight of latex-forming monomer (3 to 97 % by weight, preferably 5 to 90 % by weight, of which may be used for forming latex particles in advance) and 0 to 95 % by weight of monomer of formula (II). Crosslinking agent may optionally be included.

When two kinds of monomers are used, macromer of formula (I-a) is used in the proportion of 90 % by weight or lower, preferably 80 to 3 % by weight, more desirably 60 to 5 % by weight, from the viewpoint of particle dispersibility and non-adsorption property. Macromer of formula (I-b), on the other hand, is used in the proportion of 80 % by weight or lower, preferably 70 to 2 % by weight, more desirably 50 to 5 % by weight. When monomer of formula (II) is to be included, it is used in the proportion of 95 % by weight or lower, preferably 90 to 10 % by weight, more desirably 80 to 20 % by weight.

When magnetic body or label is made to co-exist during the above-mentioned polymerization, these fine particles can be mixed or encapsulated in polymer latex particles. Said fine particles are made to co-exist in the proportion of 0.001 to 90 % by weight, preferably 0.1 to 60 % by weight, especially desirably 1 to 20 % by weight, based on the total weight of the above-mentioned monomers.

Fine particles of magnetic body or label can be introduced, after polymer latex is formed, into the latex particles in such a manner as follows: Said latex particles are dipped in a liquid (hereinafter referred to as the first liquid) which contains said fine particles and is capable of swelling the latex particles, and, subsequently, the latex particles are shrunk, and, thus, special properties-imparted particles are introduced in the latex particles. When latex particles are to be shrunk, shrinking can be accelerated by dipping the latex particles in a liquid (hereinafter referred to as the second liquid) which has a property to shrink latex particles. When latex particles have amino group as a particle-holding site (e.g., the case where Z of formula (II) denotes dialkylaminoethyl), the first liquid may be an acidic liquid, and the second liquid may be an alkaline liquid. In this case, when latex particles are dipped in an acidic liquid in which fine particles have previously been included, the latex particles are swollen. While the latex particles are swollen, said fine particles penetrate in the latex particles. When, later, the latex particles are dipped in an alkaline liquid, the latex particles are shrunk, and, thus, the fine particles in said latex particles are held or immobilized.

Otherwise, in the case where styrene is used as a latex-forming monomer, and where latex particles are produced from a monomer group which contains styrene at a high monomeric rate, a water/acetone mixed solvent may be used as said first liquid. In this case, latex particles are dipped in a water/acetone mixed solvent in which fine particles have previously been included. While being dipped in the water/acetone mixed solvent, the latex particles are swollen, and said fine particles penetrate in thus swollen latex particles. After taken out, the latex particles are dried so that the water/acetone mixed solvent may be removed; the first particles (special property-imparted particles) can thus be held or immobilized in said latex particles.

According to the above-mentioned processes, there are provided, as intended by this invention, polymer latex particles or magnetic body- or label-containing polymer latex particles, or, if desired, also polymer latex particles wherein ligand is covalently bound, in aqueous medium, via ligand-introducing group which exists either on the surface of particle or apart from said surface across a hydrophilic polymer segment chain. These particles are usable as a diagnostic agent for clinical diagnosis or as an affinity carrier or the like for separating and purifying specific molecules which are present in organism. Preferable for use in such fields are latex particles which have been produced by using, as macromer, macromer of formula (I-a) and macromer of formula (I-b), since said latex particles show hardly any or no non-specific adsorption of impurity protein or the like onto their surface.

In the following, this invention is further specifically explained by working examples, which do not restrict the scope of this invention.
Macromer Synthesis Example 1: Synthesis of VB-PEG-NH₂

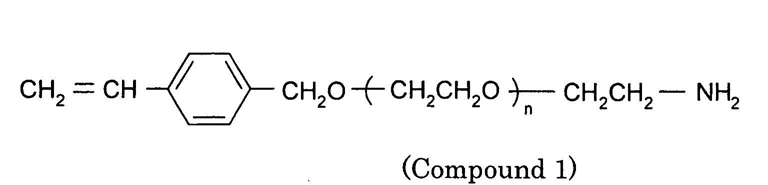

A reactor was filled with 8 mL (2 mmol) of 0.25 mol/L acetone-K⁺/tetrahydrofuran (THF) solution and 1 mL (2mmol) of 2 mol/L vinylbenzylalcohol (VBA)/THF solution in argon atmosphere. After stirring for 30 minutes, solvent was distilled off by evaporator. Residue (metallized VBA) was dissolved in THF (10 mL), and the resultant solution was subjected again to evaporation, and, thus, acetone was removed almost perfectly. Subsequently, THF (40 mL) was poured in the reactor to dissolve metallized VBA.

Then, ethyleneoxide (EO; 11.2 mL, 228 mmol, molecular weight as charged: 5000) was added, and the resultant mixture was stirred with ice cooling for two days, and, thus, polymerization was conducted. A small amount was sampled for GPC measurement, and, thus, the molecular weight of PEG was confirmed.

To reaction solution after the polymerization of EO was over, triethylamine (1.39 mL, 10 mmol) of was added. Then, the resultant solution was added dropwise to a methanesulfonyl chloride (hereinafter sometimes referred to as MSC; 0.465 mL, 6 mmol)/THF (20 mL) solution over a period of one hour and a half, and, thus, the reaction was stopped.

The resultant solution was purified by ether precipitation, benzene freeze drying and vacuum drying, and, thus, methanesulfonyl-terminated VB-PEG-MS was obtained.

To thus obtained VB-PEG-MS, 28 % ammonia water (200 mL, about 15000 times in molar amount) was added, and the resultant mixture was stirred for one day at room temperature. From this reaction solution, ammonia was distilled off by evaporator, and, furthermore, the solution was concentrated. This concentrated solution was purified by dialysis against distilled water (dialytic membrane: MWCO 1000 manufactured by Spectrum Laboratory Co.; two days; distilled water was replaced five times), and was then freeze-dried, and, thus, VB-PEG-NH2 (or Compound 1) was obtained.

By gel permeation chromatography (GPC), it was confirmed that PEG had a molecular weight of about 6000 (which corresponds to n being 130 to 140 in recurring unit (CH₂CH₂O)ₙ). The yield of recovered polymer was 11.3 g. From the total charged amount of 11.967 g and the integral value of ¹H-NMR chart of VB-PEG-MS, VB-introducing rate and MS-introducing rate were calculated. It was confirmed that VB and MS had been introduced almost 100 %.)

### Macromer Synthesis Example 2: Synthesis of VB-PEG-OH

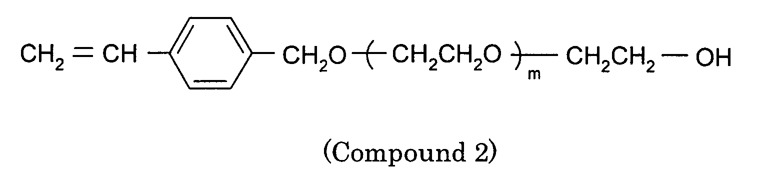

A reactor was filled with 1 mL (2mmol) of 2M VBA/THF solution and 8 mL (2 mmol) of 0.25 M acetone-potassium/THF solution in argon atmosphere at room temperature. The resultant mixture was stirred for 15 minutes to give a solution of potassium alkoxide of VBA. From this reaction mixture, acetone was distilled off by vacuum drying. Later, 60 mL of THF was added, and, moreover, 6.8 mL (0.14 mol) of ethyleneoxide was added by cooled syringe. The resultant mixture was stirred for two days at room temperature to cause ring-opening polymerization. Then, 3 mL of methanol was added to stop reaction. The resultant reaction mixture solution was poured to isopropyl alcohol which had been cooled to -15°C, and, thus, macromer was precipitated. Macromer (Compound 2) was recovered by centrifugal separation (6000 r.p.m, 40 minutes, -10°C). Solvent was removed by freeze drying.

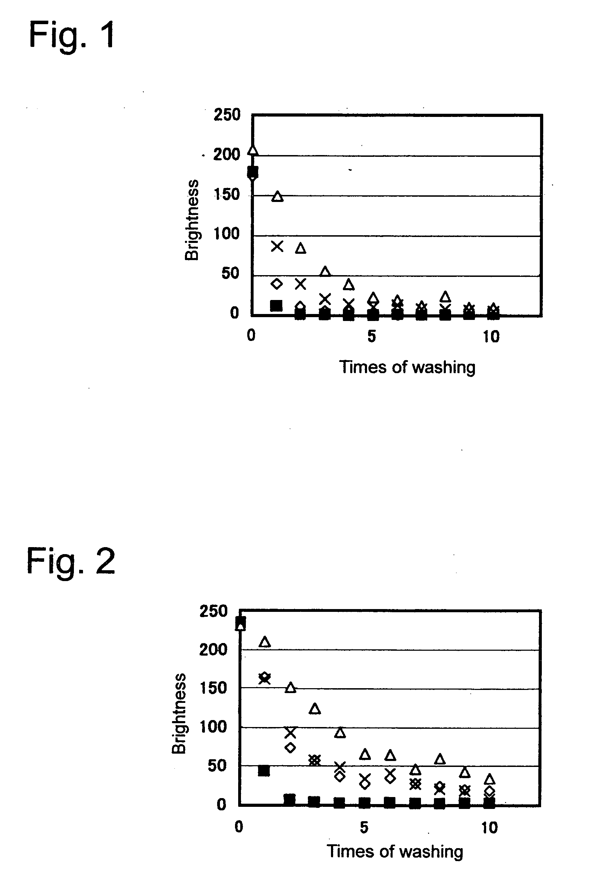

The fact that the obtained compound was the desired product (hereinafter referred to as Compound 2 or VB-PEG-OH) was confirmed by gel permeation chromatography (GPC) (with HLC-8020 made by Tosoh Corporation) and nuclear magnetic resonance measurement apparatus (JEOL EX-400 (400 MHz) made by Japan Electron Optics Laboratory Co., Ltd.) under the above-mentioned measurement condition. Fig. 2 shows ¹H-NMR spectrum of VB-PEG-OH. From the result of GPC, it was known that PEG chain had a molecular weight of 2850 and a molecular weight distribution Mw/Mn of 1.04.

From the ¹H-NMR spectrum, vinyl group-introducing rate was calculated, and, thus, it was confirmed that vinyl group had been almost quantitatively introduced.

### Macromer Synthesis Example 3: Synthesis of Acetal-PEG/PLA-Methacryloyl

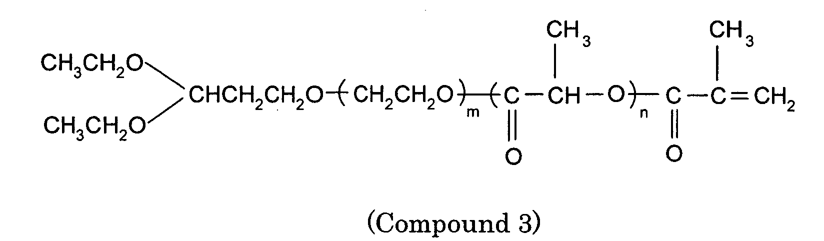

### Process to prepare potassium-naphthalene/THF solution:

To a reactor which contained naphthalene in argon atmosphere, THF was added and dissolved. Then, with ice cooling, pillar-shaped potassium was added in a molar amount of 1.05 times as much as naphthalene, and the resultant mixture was stirred for one day. The resultant solution was titrated with hydrochloric acid to give 0.3263 M potassium-naphthalene/THF solution.

### Synthesis of Acetal-PEG/PLA-Methacryloyl

A reactor was filled with 40 mL of THF and 0.32 mL (2 mmol) of 3,3'-diethoxy-1-propanol in argon atmosphere at room temperature. Then, 6.2 mL (2mmol) of 0.3263 M potassium-naphthalene/THF solution was added, and the resultant mixture was stirred for 15 minutes to give a solution of potassium alkoxide solution. To this solution, 11.3 mL (0.23 mol) of ethyleneoxide was added by cooled syringe. The resultant mixture was stirred for two days at room temperature to cause ring-opening polymerization, and, thus, acetal-PEG-OH was synthesized. To this polymerization solution, 8.4 mL (8.4 mmol) of 1 mol/L DL-lactide/THF solution was added, and stirred for three hours at room temperature for further polymerization reaction to occur. Subsequently, 4.5 mL (28 mmol) of methacrylic anhydride was added, and, after stirring for two days at room temperature, reaction was stopped. This macromer mixture solution was poured to isopropyl alcohol which had been cooled to -15°C, and, thus, monomer was precipitated. Macromer was recovered by centrifugal separation (6000 r.p.m, 40 minutes, -10°C). Macromer was further poured to isopropyl alcohol to precipitate. Then, macromer was purified by centrifugal separation (6000 r.p.m, 40 minutes, -10°C), and, subsequently, macromer was dissolved in benzene. By freeze-drying, macromer (Compound 3, also referred to as acetal-PEG/PLA-methacryloyl) was recovered.

The fact that the obtained compound was the desired product was confirmed by gel permeation chromatography (GPC) (with HLC-8020 made by Tosoh Corporation) and nuclear magnetic resonance measurement apparatus (JEOL EX-400 (400 MHz) made by Japan Electron Optics Laboratory Co., Ltd.) under the above-mentioned measurement condition. From the result of GPC, it was known that PEG chain had a molecular weight of 5530 and a molecular weight distribution Mw/Mn of 1.03. The molecular weight of lactide chain (PLA) of acetal-PEG/PLA-methacryloyl was found to be 150, as calculated from the molecular weight of PEG chain as a result of GPC and ¹H-NMR spectrum. From the ¹H-NMR spectrum, vinyl group-introducing rate was calculated, and, thus, it was confirmed that vinyl group had been almost quantitatively introduced.

### Example 1: Preparation of magnetic latex particles A-1

To a reactor which contained 5 % by weight aqueous solution of polyvinyl alcohol (PVA) (40 mL), there were filled VB-PEG-NH₂ as obtained above (0.5 g; corresponding to 130 to 140 recurring units (CH₂CH₂O)), 50 % by weight aqueous solution of poly(ethyleneglycol)methylethermethacrylate (Aldrich; molecular weight: 2,000; 4.8 mL; 0.25 g; corresponding to 45 to 50 recurring units (CH₂CH₂O)), ferricolloid (FC; 1 mL), styrene (St; 3.3 mL; 3 g) and potassium persulfate (KPS; 0.2 g). While the resultant mixture was stirred, the reactor was subjected to vacuum deaeration with aspirator. Subsequently, reduced pressure in the system was normalized by filling argon. Thus, the consecutive operation of i) vacuum deaeration and ii) subsequent pressure-normalization with argon was repeated three times. Then, the mixture was stirred with three-one-motor for 36 hours at 500 rpm and 60°C, and, thus, a solution which contained magnetic latex particles A-1 was recovered. A drop of thus recovered solution was added to a suitable amount (about 10 to 20 mL) of distilled water, and, then, the resultant mixture was dispersed by gentle shaking, and, subsequently, magnetic latex particles A-1 were precipitated with strong magnet. Supernatant liquid was removed, and, then, thus precipitated magnetic latex particles A-1 were dispersed again in distilled water. Supernatant liquid and solution wherein precipitate had been dispersed were subjected to Dynamic Light Scattering (DLS) measurement. As a result, it was found that magnetic latex particles A-1 had a particle size of 0.67 µm.

### Example 2: Preparation of magnetic latex particles A-2

To a reactor which contained 5 % by weight aqueous solution of PVA (40 mL), there were filled VB-PEG-NH₂ as obtained above (0.5 g) and 50 % by weight aqueous solution of poly(ethyleneglycol)methylethermethacrylate (Aldrich; molecular weight: 2,000; 4.8 mL; 0.25 g), and the resultant mixture was adjusted to pH 4 with HCl. Subsequently, FC (1 mL), St (3.3 mL; 3 g) and KPS (0.2 g) were added, and, while the resultant mixture was stirred, the reactor was subjected to vacuum deaeration with aspirator. Then, reduced pressure in the system was normalized by filling argon. Thus, the consecutive operation of i) vacuum deaeration and ii) subsequent pressure-normalization with argon was repeated three times. Then, the mixture was stirred with three-one-motor for 48 hours at 500 rpm and 60°C, and, thus, a solution which contained magnetic latex particles A-2 was recovered. A drop of thus recovered solution was added to a suitable amount (about 10 to 20 mL) of distilled water, and, then, the resultant mixture was dispersed by gentle shaking, and, subsequently, magnetic latex particles A-2 were precipitated with strong magnet. Supernatant liquid was removed, and, then, thus precipitated magnetic latex particles A-2 were dispersed again in distilled water. Supernatant liquid and solution wherein precipitate had been dispersed were subjected to Dynamic Light Scattering (DLS) measurement. As a result, it was found that magnetic latex particles A-2 had a particle size of 0.51 µm.

### < Confirmation of non-specific adsorption property of Polyethylene Glycolized Magnetic Nano Particles >

There were prepared magnetic latex particles A-2 (concentration: 2.5 mg/mL) purified by separation with centrifugation and magnet and ferrite beads B-1 on the market which had a surface group of carboxylic acid (concentration: 2.5 mg/mL), from which two samples each in an amount of 3 mL were taken, and left to stand still in a screw-necked test tube put on a permanent magnet. Precipitates which had been drawn by the magnet and supernatant liquid were separated from each other. The supernatant liquid was removed, and 3 mL of PBS was newly added. The resultant mixture was washed by Voltex (10 s; speed: 8), and supernatant liquid was removed. This operation was repeated three times. To this mixture, 3 mL of 45 mg/mL BSA (bovine serum albumin: almost the same concentration as in human body) was added, and, then, the resultant mixture was left to stand still at room temperature for one hour. After one hour, particles were immobilized by magnet, supernatant BSA-PBS was removed, and, then, 3 mL of PBS was added. The resultant mixture was rinsed by Voltex (10 s; speed: 8), and supernatant liquid was removed. After this operation was repeated three times, the mixture was dipped in 2.5 mL of SDS-PBS for one hour, and, thus, BSA which had adhered to particle surface was peeled off. After one hour, particles were rinsed by Voltex (10 s; speed: 8). To 2 mL of the resultant supernatant liquid, 2 mL of BSA solution was added, and the resultant mixture was incubated at 60°C for one hour. After one hour, absorbance at a wavelength of 562 nm was measured by UV-vis spectrometer. On the basis of a previously prepared calibration curve, the concentration of adsorbed BSA was calculated.

As a result of calculation, it was found that the amount of BSA adsorbed on magnetic latex particles was about 0.0015 mg/mL, which was about 1/13 of the amount on ferrite beads (0.02 mg/mL), and which was about 1/27800 of initial concentration of BSA (45 mg/mL). As a main cause of this decrease of non-specific adsorption, it is considered that protein was repelled by the high mobility of PEG which covered the particles, and that the remarkable difference was resulted as compared with naked Fe particles (ferrite particles).

### Example 3: Preparation of biotinylated magnetic latex particles and of biotinylated ferrite beads

### < Biotinylation of ferrite beads B-1 >

A 12 mL aqueous solution of 2.5 mg/mL ferrite beads in super high-purity water was subjected to centrifugation (3600 rpm/30 minutes/5°C). After supernatant liquid was removed, 12 mL of super high-purity water was newly added for re-dispersion. From the resultant dispersion, there was dispensed 6 mL, to which a mixed solution of 3 mL of EDC (N-ethyl-N'-(dimethylaminopropylcarbodiimide) and 3 mL of NHS (N-hydroxysuccimide) was added, and, then, the resultant mixed solution was left to stand still for 10 minutes. After 10 minutes, this mixed solution was subjected to centrifugation (3600 rpm/20 minutes/5°C). After supernatant liquid was removed, 6 mL of super high-purity water was newly added for re-dispersion. To the resultant dispersion, there was added 1 mL of 1 mg/mL aqueous solution of biocytin hydrazide, and, then, the resultant solution was left to stand still for 30 minutes. After 30 minutes, this solution was subjected to centrifugation (3600 rpm/10 minutes/5°C). After supernatant liquid was removed, the same amount of super high-purity water was newly added for re-dispersion. To the resultant dispersion, there was added 3 mL of 2-aminoethanol, and, then, the resultant solution was left to stand still for 20 minutes. This solution was subjected to centrifugation (3600 rpm/5 minutes/5°C), and, subsequently, supernatant liquid was removed, and, then, super high-purity water was newly added, which operation was repeated three times, and, thus, biotinylated ferrite beads B-2 was obtained.

### < Biotinylation of magnetic latex particles A-1 >

A 4 mL aqueous solution of 2.5 mg/mL magnetic latex A-2 was subjected to centrifugation (1000 rpm/30 minutes/5°C). After supernatant liquid was removed, the same amount of super high-purity water and 2 mL of 0.1 mg/mL active ester biotin were added, and, then, the resultant solution was left to stand still for 20 minutes. Subsequently, the solution was washed with 0.15 mol/dm³ NaCl aqueous solution, and, thus, biotinylated magnetic latex particles A-3 was obtained.

There were taken, each 100 µL (particle concentration: 2.5 mg/mL), four aqueous particle solutions of biotinylated magnetic latex particles A-3, of magnetic latex particles A-1, of biotinylated ferrite beads B-2 and of ferrite beads-B-1. To each of the solutions, there were added 500 µL of 0.01 mg/mL (6.7 × 10⁻⁷ mole/L) texasredstreptavidin and 500 µL of 0.045 mg/mL (6.7 × 10⁻⁷ mole/L) FITC-BSA. The resultant solutions were each left to stand still for one hour. After one hour, particles were immobilized with magnet, and 1 mL of solution was carefully taken out of each of test tubes. The remaining solution was diluted by the addition of 1 mL of aqueous solution of PBS, and, then, the resulting mixture was re-dispersed with Voltex for washing. After each washing, fluorescent images of texasred and of FITC were taken by CCD camera, and, then, the images were analyzed.

From thus obtained images, the change of the amount of FITC-BSA adsorbed (Fig. 1) and of streptavidin adsorbed (Fig. 2) according to the times of washing is graphically shown with respect to each of the particles. Incidentally, biotin is specifically adsorbed on, or bound to, avidin, and undesirably (non-specifically) adsorbed on, or bound to, BSA.

It is seen in Fig. 1 that biotinylated magnetic latex particles A-3 and magnetic latex particles A-1 show almost no adsorption of BSA after two or three washings. Biotinylated ferrite beads B-2 and of ferrite beads B-1, on the other hand, show adsorption of BSA even after ten washings. It is known from these facts that, whereas non-specific adsorption is inhibited in biotinylated magnetic latex particles A-3 and magnetic latex particles A-1, non-specific adsorption is observed in biotinylated ferrite beads B-2 and ferrite beads B-1, in particular in biotinylated ferrite beads B-2.

In Fig. 2, from a comparison between the result of biotinylated magnetic latex particles A-3 and that of magnetic latex particles A-1, it is known that, whereas biotinylated magnetic latex particles A-3 show the adsorption of streptavidin, owing to specific adsoption or binding, even after plural times of washings, magnetic latex particles A-1 show almost no adsorption of streptavidin after two washings on account of the absence of biotin. Thus, Fig. 2 exhibits specific adsorption or binding caused by biotin.

As mentioned above, it is seen from Fig. 1 and Fig. 2 that biotinylated magnetic latex particles A-3 show specific adsorption owing to the presence of biotin, and show inhibited non-specific adsorption owing to the presence of short-chain PEG.

### Example 4: Dispersion polymerization of styrene where ferrite particles whose surface had been treated with benzoic acid and acetal-PEG/PLA-methacryloyl co-existed

### (1) Preparation of vinyl benzoate-modified ferrite particles

Hydrochloric acid was added to 150 mL of water to adjust pH to 1.7. To the resultant solution, 0.405 g of FeCl₃ (1.5 × 10⁻³ M) and 0.250 g of FeSO₄ (9.0 × 10⁻⁴ M) were added, and stirred to be dissolved. To this solution, ammonia solution was added, and stirred vigorously until pH became 9. Subsequently, to the resultant solution, 1.776 g (0.024 M) of vinyl benzoate was added. After left to stand still, the resultant solution was freeze-dried, and, thus, the above-captioned surface-treated ferrite was obtained.

(2) Vinyl benzoate-modified ferricolloid in an amount of 0.045 g as obtained in the above (1) was dispersed in 4 mL of styrene, and, subsequently, 45 mL of water, 0.1 g of acetal-PEG/PLA-methacryloyl as produced in accordance with Macromer Synthesis Example 3 and 0.085 g of benzoyl peroxide were added. After stirring and deaeration, 0.1 g of N,N-dimethylaniline was added, and, with stirring at 400 rpm, polymerization reaction was made to proceed for 20 hours. Thus produced latex particles had an average particle size of 200 nm.

When polymerization was conducted under the same conditions except that the addition of N,N-dimethylaniline was replaced with heating (60°C), there were formed giant associated bodies with no dispersion at all, and, thus, uniform magnetic particles could not be obtained.

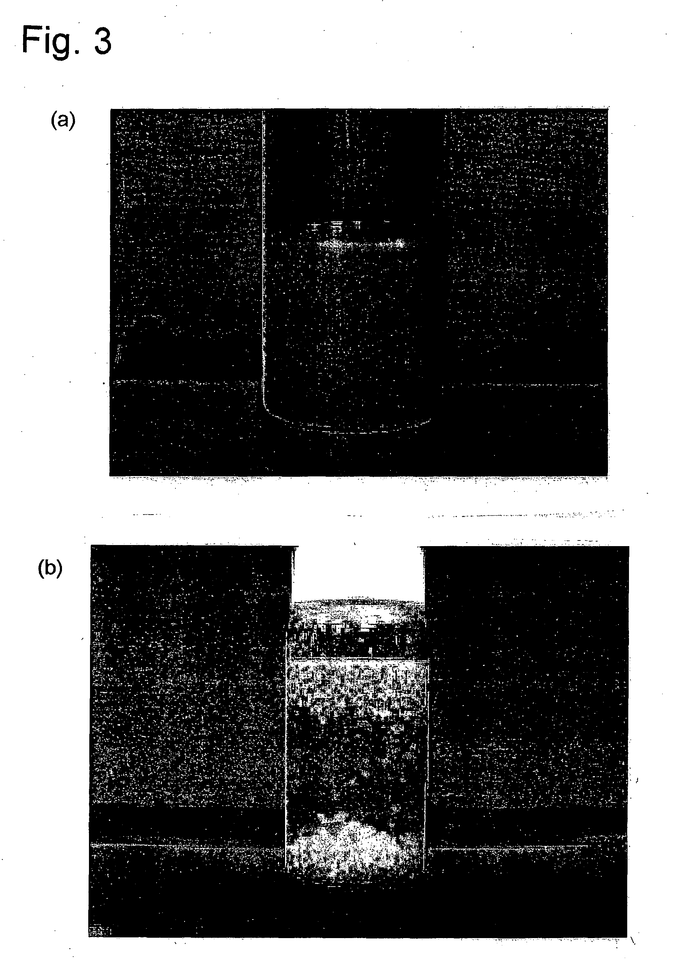

Fig. 3 shows, in place of photograph, the state of thus obtained latex particles. Fig. 3 (a) shows latex with use of redox initiator, and (b) shows latex with use of radical initiator under heating.

### Example of preparation of polystyrene latex by soap-free polymerization:

A 100 mL flask was filled with 4 mL of styrene, 45 mL of distilled water and 0.024 g of potassium persulfate. After 10 minutes of argon bubbling, the resultant mixture was made to react at 70°C for five hours with stirring at 350 rpm. Later, by observation with SEM, it was confirmed that thus produced mono-dispersed styrene latex had an average particle size of 1 µm.

### Example 5: Seed polymerization

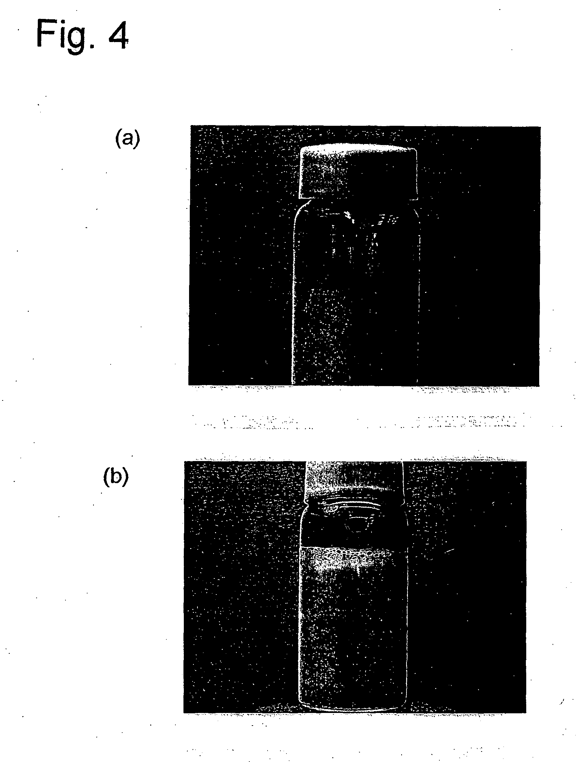

A 200 mL round flask was filled with 31 mL of styrene latex dispersion (0.078 g/mL; particle size: 1 µm) as obtained in the above "Example of preparation of polystyrene latex", 45 mL of distilled water, 2.6 mL of styrene, 0.13 g of vinyl benzoate-modified ferricolloid (as prepared in Example 4), 0.048 g of azobisisobutyronitrile (AIBN) and acetal-PEG/PLA-methacryloyl as obtained in Macromer Synthesis Example 3. After 10 minutes of stirring, a 10 mL aqueous solution of 4 g of HO-PEG-OH (MW: 6,000) on the market was added. After deaeration, the resultant dispersion was stirred for 12 hours. This dispersion was made to react at 70°C for 24 hours with stirring at 270 rpm. Thus obtained dispersed latex particles not only showed high dispersibility but were well attracted by magnet. Fig. 4 is a micrograph in place of drawing which indicates the state of dispersion of the obtained magnetic latex paricles.

### Industrial Applicability

This invention provides polymer latex particles which are uniformly and stably dispersed in aqueous medium. Said latex particles can stably encapsulate magnetic body or the like, and can also remarkably inhibit non-specific adsorption of impurity protein or the like onto the surface of the particles. Hence, not restrictively, this invention provides clinical diagnostic agents, and is applicable in fields wherein clinical diagnostic agents are utilized.

## Claims

1. A process to produce latex polymer particles which is **characterized in that** polymerization reaction is conducted in an aqueous medium while the aqueous medium is stirred, said aqueous medium comprising:
(i) a macromer which has, on one terminal, a polymerizable ethylenic group and, on the other terminal, a hydrophilic polymer segment (which may be terminated with a ligand-introducing group) via or not via a hydrophobic polymer segment,
(ii) one or more kinds of latex-forming monomers,
(iii) a polymerization initiator, and
(iv) optionally a magnetic body or a label.

2. A process of claim 1 wherein polymerization initiator is a redox initiator.

3. A process of claim 2 wherein a magnetic body or a label is present.

4. A process of claim 2 wherein hydrophilic polymer segment is a segment originated from a water-soluble polymer selected from the group consisting of poly(ethyleneglycol), poly(vinylalcohol), poly(vinylpyrrolidone), poly(dextran), poly(dextrin) and gelatin, and wherein hydrophobic segment is originated from a scarcely water-soluble polymer selected from the group consisting of poly(lactide), poly(ε-caprolactone), poly(α- and/or β-benzyl aspartic acid) and poly(y-benzyl glutamic acid).

5. A process of claim 2 wherein macromer has no hydrophobic polymer segment, and wherein hydrophilic polymer segment is originated from poly(ethyleneglycol).

6. A process of claim 2 wherein macromer has no hydrophobic segment, and wherein poly(ethyleneglycol) segment on the other terminal is terminated with a group selected from the group consisting of hydroxyl group, carboxyl group, sulfo group, aldehyde group, amino group, imino group, mercapto group, active ester-type protected hydroxyl group, active ester-type protected carboxyl group, acetal-type protected aldehyde group, organic sulfonyl-protected hydroxyl group, reactivity-protected amino group and C₁-C₄ alkoxyl group.

7. A process of claim 1 wherein polymerization reaction is conducted with the co-existence of latex particles which have previously been formed with use of latex-forming monomers as mentioned in (ii).

8. A process of claim 7 wherein latex-forming monomer is selected from the group consisting of styrene, α-methylstyrene, *p*-bromostyrene, vinyltoluene, 1-vinylnaphthalene, C₁-C₄ alkyl (meth)acrylate and divinylbenzene.

9. A process of claim 7 wherein a magnetic body is present.

10. A process of claim 7 wherein magnetic body has been treated to be hydrophobic.

11. A process of claim 1 or 2 wherein two kinds of macromers exist, the first macromer having formula (I-a) as follows: 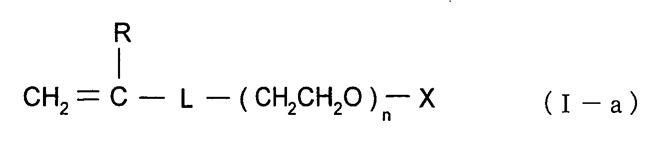 and, the second macromer having formula (I-b) as follows: 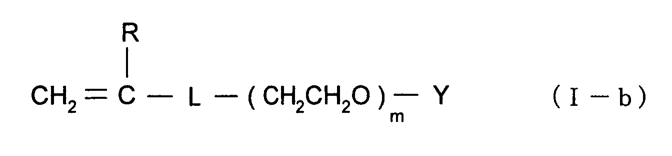 wherein R independently denotes a hydrogen atom or an alkyl group having 1 to 3 carbon atoms; L independently denotes (CH₂)ₐO, COO, OCO, CONH, (CH₂)ₐNH, phenylene (C₆H₄), phenyleneoxy (C₆H₄O), oxyphenylene (OC₆H₄), benzyloxy (C₆H₄CH₂O) or oxybenzyl (OCH₂C₆H₄) (a denotes an integer of 1 to 3; each group is to be incorporated in the above formula in the direction as mentioned); n denotes an integer of 11 to 10,000; m denotes an integer which, in connection with each n, is smaller than n by at least 10; X (or a group with which poly(ethyleneglycol) sement is terminated) denotes a group selected from the group consisting of hydroxyl group, carboxyl group, sulfo group, aldehyde group, amino group, imino group, active ester-type protected hydroxyl group, active ester-type protected carboxyl group and acetal-type protected aldehyde group each of which is bound via or not via (CH₂)_{b} or CO(CH₂)_{b}; and Y denotes either an alkyl group having 1 to 6 carbon atoms which may be substituted with halogen atom or a benzyl group whose benzene ring may be substituted with a halogen or an alkyl or alkoxyl group having 1 to 3 carbon atoms.

12. A process of claim 11 wherein one or more kinds of latex-forming monomers are selected from the group consisting of styrene, α-methylstyrene, *p*-bromostyrene, vinyltoluene, 1-vinylnaphthalene, C₁-C₄ alkyl (meth)acrylate and divinylbenzene.

13. A process of claim 1 or 2 wherein there co-exists another monomer of formula (II): 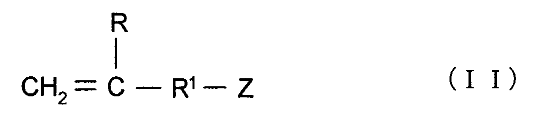 wherein R denotes a hydrogen atom or an alkyl group having 1 to 3 carbon atoms;
R¹ denotes a single bond, (CH₂)ₐ, CH=CH, COO, OCO, CONH, (CH₂)ₐNH, phenylene (C₆H₄), phenyleneoxide (C₆H₄O), oxyphenylene (OC₆H₄), benzyloxy (C₆H₄CH₂O) or oxybenzyl (OCH₂C₆H₄) (a denotes an integer of 1 to 3; each group is to be incorporated in the above formula in the direction as mentioned); and
Z denotes a group selected from the group consisting of amino group, carboxyl group, cyano group, amide group, urethane group and urea group.

14. A process of claim 2 wherein a magnetic body exists.

15. A process of claim 14 wherein magnetic body has been treated to be hydrophobic.

16. A process of claim 1 wherein either a magnetic body or a label is non-existent.

17. A process to produce latex polymer particles which is **characterized in that** latex polymer particles are produced by the process of claim 16; said latex polymer particles are dipped in a liquid which is capable of swelling the latex particles, and which contains magnetic particles or label suspended therein; subsequently, the latex particles are shrunk; and, thus, magnetic particles or label is mixed in the latex polymer particles.

18. Polymer latex particles, as a high-polymer material, having an average particle size of 0.01 to 5 µm when measured by a dynamic light scattering photometer (DLS), and in which their surface layer (shell) domain has hydrophilic polymer segment, said latex polymer particles being produced by the polymerization of:
(a) 0.5 to 99.5 % by weight of macromer which has, on one terminal, a polymerizable ethylenic group and, on the other terminal, a hydrophilic polymer segment (which may be terminated with a ligand-introducing group) via or not via a hydrophobic polymer segment, and
(b) 0.5 to 99.5 % by weight of one or more kinds of latex-forming monomer, based on the weight of total monomer used.

19. Latex particles of claim 18 wherein magnetic body or label is mixed in the nucleus (core) domain of the particles.

20. Latex particles of claim 18 or 19 wherein 3 to 97 % by weight, based on the weight of latex-forming monomer b), of latex-forming monomer b) has previously been used for forming latex particles.

21. Latex particles of claim 18 wherein magnetic body is adhered to, or mixed in, latex particles which essentially comprise latex-forming monomer, and wherein at least a polymer segment originated from macromer a) or latex-forming monomer b) exists on the surface of said latex particles.

22. Latex particles of claim 21 wherein hydrophilic polymer segment of macromer is poly(ethyleneglycol) segment.

23. Latex particles of claim 18 wherein macromer has no hydrophobic polymer segment, and wherein hydrophilic polymer segment is originated from poly(ethyleneglycol).

24. Latex particles of claim 23 wherein macromer has no hydrophobic segment, and wherein poly(ethyleneglycol) segment on the other terminal is terminated with a group selected from the group consisting of hydroxyl group, carboxyl group, sulfo group, aldehyde group, amino group, imino group, mercapto group, active ester-type protected hydroxyl group, active ester-type protected carboxyl group, acetal-type protected aldehyde group, organic sulfonyl-protected hydroxyl group, reactivity-protected amino group and C₁-C₄ alkoxyl group.

25. Latex particles of claim 24 wherein two kinds of macromers exist, the first macromer having formula (I-a) as follows: 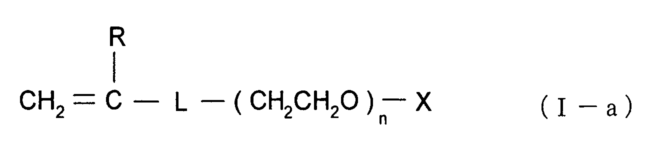 and, the second macromer having formula (I-b) as follows: 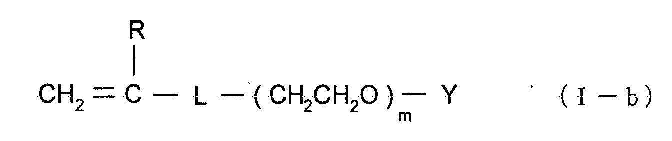 wherein R independently denotes a hydrogen atom or an alkyl group having 1 to 3 carbon atoms;
L independently denotes (CH₂)ₐO, COO, OCO, CONH, (CH₂)ₐNH, phenylene (C₆H₄), phenyleneoxy (C₆H₄O), oxyphenylene (OC₆H₄), benzyloxy (C₆H₄CH₂O) or oxybenzyl (OCH₂C₆H₄) (a denotes an integer of 1 to 3; each group is to be incorporated in the above formula in the direction as mentioned);
n denotes an integer of 11 to 10,000;
m denotes an integer which, in connection with each n, is smaller than n by at least 10;
X (or a group with which poly(ethyleneglycol) sement is terminated) denotes a group selected from the group consisting of hydroxyl group, carboxyl group, sulfo group, aldehyde group, amino group, imino group, active ester-type protected hydroxyl group, active ester-type protected carboxyl group and acetal-type protected aldehyde group each of which is bound via or not via (CH₂)_{b} or CO(CH₂)_{b}; and
Y denotes either an alkyl group having 1 to 6 carbon atoms which may be substituted with halogen atom or a benzyl group whose benzene ring may be substituted with a halogen or an alkyl or alkoxyl group having 1 to 3 carbon atoms.

26. Latex particles of claim 25 wherein one or more kinds of latex-forming monomers are selected from the group consisting of styrene, α-methylstyrene, *p*-bromostyrene, vinyltoluene, 1-vinylnaphthalene, C₁-C₄ alkyl (meth)acrylate and divinylbenzene.

27. Latex particles of claim 23 wherein there co-exists another monomer, from which a high-polymer material is derived, having formula (II): 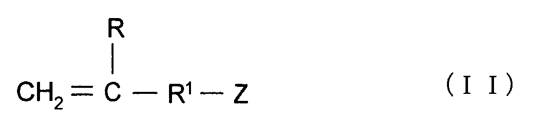 wherein R denotes a hydrogen atom or an alkyl group having 1 to 3 carbon atoms;
R¹ denotes a single bond, (CH₂)ₐ, CH=CH, COO, OCO, CONH, (CH₂)ₐNH, phenylene (C₆H₄), phenyleneoxide (C₆H₄O), oxyphenylene (OC₆H₄), benzyloxy (C₆H₄CH₂O) or oxybenzyl (OCH₂C₆H₄) (a denotes an integer of 1 to 3; each group is to be incorporated in the above formula in the direction as mentioned); and
Z denotes a group selected from the group consisting of amino group, carboxyl group, cyano group, amide group, urethane group and urea group.

28. Latex particles of claim 24 or 25 wherein ligand is covalently bound via a group with which poly(ethyleneglycol) segment is terminated.

29. Latex particles of claim 25 or 28 wherein magnetic body is mixed in, and wherein said magnetic body has been treated to be hydrophobic.
